# EUROPÄISCHE PATENTSCHRIFT

(11) **EP 1 080 974 B1**
(45) Veröffentlichungstag und Bekanntmachung des Hinweises auf die Patenterteilung: **17.05.2006**
(21) Anmeldenummer: 00117234.5
(22) Anmeldetag: 14.08.2000
(51) Int. Cl.: B60K 35/00

(54) **Anzeigeeinheit für eine Fahrzeug- Heiz- oder Klimaanlage mit einem Bordmonitor**
Display unit for a vehicle heating or airconditioning device including a screen
Dispositif indicateur pour l'installation de chauffage ou de climatisation d'un véhicle avec écran de bord

(30) Priorität: 03.09.1999 DE 19941951
(43) Veröffentlichungstag der Anmeldung: 07.03.2001
(73) Patentinhaber: Volkswagen Aktiengesellschaft, 38436 Wolfsburg (DE)
(72) Erfinder: Crull, Torsten, 38106 Braunschweig (DE); Heimermann, Matthias, 38302 Wolfenbüttel (DE); Müller, Kai, Dr., 38531 Rötgesbüttel (DE)

(56) Entgegenhaltungen:
- DE-A- 19 609 589
- DE-A- 19 807 410
- DE-C- 3 514 438
- DE-U- 29 710 675
- US-A- 5 821 935

## Beschreibung

Die Erfindung betrifft eine Anzeigeeinheit für eine Fahrzeug- Heiz- oder Klimaanlage mit einem multifunktionalen Bordmonitor.

Aus der DE 197 35 317 A1 ist eine Anzeigeeinheit für eine Fahrzeug- Heiz- oder Klimaanlage bekannt, mit einem Bordmonitor, auf welchem die gewählte Temperatur für einzelne, bezüglich eines Fahrzeuginsassen definierte Zonen durch unterschiedliche Farbgestaltung eines im wesentlichen balkenförmigen Symbols darstellbar ist, wobei durch unterschiedliche Abmessungen der einzelnen balkenförmigen Symbole die den jeweiligen Zonen zugeteilte Luftmenge dargestellt wird. Nachteilig an der Nutzung von multifunktionalen Bordmonitoren, die beispielsweise zusätzlich zur Darstellung von Navigationsdaten, Audio- Video- Einstellungen und anderen Komfortkomponenten genutzt werden, ist, daß die verschiedenen Menüs hierarchisch untergliedert sind. Da aber der Nutzer häufig, insbesondere bei Fahrbeginn die Klima- und / oder Heizanlage verstellt, muß dieser häufig die Menüebenen wechseln, was sehr unkomfortabel ist.

In den bekannten Kraftfahrzeugen mit Heiz- und / oder Klimaanlage existiert daher unterhalb des Bordmonitors eine separate kleine Anzeigeeinheit mit Bedienelementen, die ausschließlich zur Bedienung für die Heiz- und oder Klimaanlagen dient. Die Größe dieser zusätzlichen Anzeigeeinheit ist dabei durch den Bauraum der Konsole begrenzt. Aufgrund der kleinen Abmessungen ist jedoch die Bedienung sehr schwierig.

Ferner zeigt DE 3514 438 C1 eine Multifunktionsanzeige- und Bedieneinrichtung gemäß dem Oberbegriff des Anspruchs 1.

Der Erfindung liegt daher das technische Problem zugrunde, eine Anzeigeeinheit für eine Fahrzeug- Heiz- und / oder Klimaanlage zu schaffen, die eine komfortablere Bedienbarkeit ermöglicht.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Dabei werden dem Bordmonitor zweite separate Bedienelemente zugeordnet, die eine höhere Priorität als die ersten Bedienelemente aufweisen und über die mindestens Grundeinstellungen der Heiz- und / oder Klimaanlage veränderbar sind. Dadurch kann der Nutzer ohne ein aufgerufenes Menü beispielsweise für die Navigation zu verlassen schnell und einfach Änderungen an der Klima- und / oder Heizungsregelung vornehmen. Dabei kann der Nutzer voll auf die Vorteile des Bordmonitors hinsichtlich Größe und Leistungsvermögen zurückgreifen. Im Vergleich zu Anordnungen mit einer separaten Anzeigeeinheit für die Heiz- und / oder Klimaanlage ergibt sich ein kompakterer Aufbau und im Vergleich zu den bekannten Lösungen mit einer einzigen Anzeigeeinheit eine erheblich vereinfachte Bedienstruktur bei minimaler Zunahme des Bauraums.

In einer bevorzugten Ausführungsform existiert dennoch ein Hauptmenü für die Heiz- und / oder Klimaanlage, das über die ersten Bedienelemente aufgerufen wird. Dadurch kann die Zuordnung für die zweiten Bedienelemente auf die einfachen und häufig benutzten Funktionen und Einstellungen beschränkt werden, wohingegen komplexere Einstellungen im Hauptmenü durchgeführt werden.

Für die Visualisierung der Funktionen der zweiten Bedienelemente bieten sich insbesondere zwei Lösungsmöglichkeiten an. Zum einen kann nach Betätigung eines der zweiten Bedienelemente ein Popup- Menü auf dem Bordmonitor eingeblendet werden, das dann solange eingeblendet bleibt, wie Einstellungen über die zweiten Bedienelemente vorgenommen werden und anschließend wieder ausgeblendet wird. Alternativ kann die auf dem Bordmonitor permanent dargestellte Statusanzeige für die wichtigsten Heiz- und / oder Klimafunktionen bei der Betätigung der zweiten Bedienelemente aufgezoomt und die Änderungen der Einstellungen visualisiert werden.

Vorzugsweise sind neben dem Bordmonitor multifunktionale Bedienelemente angeordnet, deren jeweilige Funktionalität an den entsprechenden Positionen auf dem Bordmonitor alphanumerisch und / oder piktogrammförmig dargestellt sind, wodurch eine gute Zuordenbarkeit realisiert wird. Des weiteren können diese alphanumerischen und / oder piktogrammförmigen Belegungshinweise optisch hervorgehoben werden, wenn die zugeordnete Funktion oder Einstellung aktiv ist.

Die Erfindung wird nachfolgend anhand eines bevorzugten Ausführungsbeispieles näher erläutert. Die Fig. zeigen:

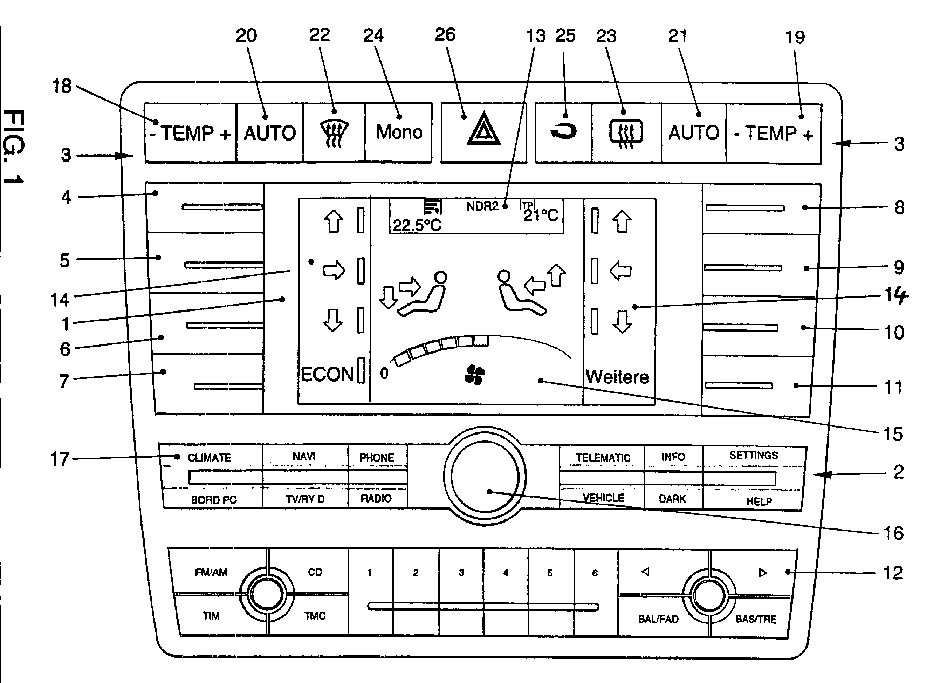

- Fig. 1: eine Darstellung eines Infotainments und
- Fig. 2: eine Darstellung eines Bordmonitors mit einem Popup- Menü für eine Grundfunktion einer Klima- und / oder Heizanlage.

Das Infotainment umfaßt einen Bordmonitor 1, eine Anzahl erster Bedienelemente 2 und eine Anzahl zweiter Bedienelemente 3. Seitlich am Bordmonitor 1 sind multifunktionale Bedienelemente 4-11 angeordnet, deren Funktionalität mit dem aufgerufenen Menü auf dem Bordmonitor 1 wechselt. Des weiteren umfaßt das Infotainment eine Bedienleiste 12 für Audio- Anwendungen, die hier aber nicht näher erläutert werden sollen.

Die Menüdarstellung auf dem Bordmonitor ist dreigeteilt und umfaßt eine Statuszeile 13, eine Belegungszuordnung 14 für die multifunktionalen Bedienelemente 4-11 und eine Einstellungsanzeige 15 für das jeweils ausgewählte Menü. Mittels Betätigung des entsprechenden Bedienfeldes der ersten Bedienelemente 2 kann der Nutzer sich ein gewünschtes Menü aufrufen und mittels der multifunktionalen Bedienelemente 4-11 sowie eines zentralen Bedienknopfes 16 Einstellung vornehmen. Im dargestellten Beispiel ist das Menü für die Heiz- und Klimaanlage gezeigt, das durch das Bedienfeld 17 aufrufbar ist.

Die Einstellungsanzeige 15 umfaßt zwei piktogrammförmige Figuren, die den Fahrer und den Beifahrer darstellen. Unterhalb der beiden Figuren ist eine Skala für die Gebläsestärke mit einem entsprechenden Piktogramm für das Gebläse dargestellt, wobei sowohl das Piktogramm als auch die Skala optisch hervorgehoben sind, d.h. aktiv sind. Daher kann der Nutzer beispielsweise mittels des Bedienknopfes 16 die Gebläsestärke verändern, was dann an der Skala dargestellt wird. Den piktogrammförmigen Figuren sind Pfeile zugeordnet, die die jeweils eingestellte Gebläsestellung symbolisieren. Im dargestellten Beispiel ist die Gebläsestellung für den Fahrer auf die Beine und den Oberkörper und für den Beifahrer auf den Oberkörper und nach oben gerichtet. Diese Einstellungen sind darüber hinaus an der Belegungszuordnung 14 ablesbar. Aus dieser ergibt sich, daß mittels des Bedienelementes 4 die Gebläsestellung für den Fahrer nach oben zu- oder abgeschaltet werden kann. Mittels des Bedienelementes 5 kann die Gebläsestellung auf den Oberkörper gerichtet zu und abgeschaltet werden. Da neben dem horizontalen Pfeil in der Belegungszuordnung ein Statusfeld optisch hervorgehoben ist, erkennt der Nutzer, daß diese Einstellung aktiv ist, was durch die Darstellung in der Einstellungsanzeige 15 betätigt wird. Mittels des Bedienelementes 6 kann die Gebläsestellung auf die Beine des Fahrers zu- oder abgeschaltet werden. Entsprechende Funktionen haben die Bedienelemente 8-10 für den Beifahrer. Mittels des Bedienelementes 7 kann im Klimamenü auf einen energiesparenden Betrieb umgeschaltet werden, wohingegen über das Bedienelement 11 weiter Unter- Menüs der Klima- und / oder Heizanlage aufrufbar sind. Die Belegung der multifunktionalen Bedienelemente 4-11 ist dabei stets von dem ausgewählten Menü abhängig. Wechselt der Nutzer beispielsweise von dem dargestellten Hauptmenü mittels des Bedienelementes 11 in ein Unter- Menü, so verändert sich auch die Belegung der Bedienelemente 4-11.

Die Statuszeile 13 ist permanent, unabhängig von dem aktuellen Menü stets an der gleichen Position mit den gleichen Statusanzeigen auf dem Bordmonitor 1 angeordnet. Die Statuszeile 13 umfaßt dabei die eingestellten Temperaturen für den Fahrer und den Beifahrer. Im vorliegenden Beispiel ist die Temperatur für den Fahrer auf 22,5 °C und für den Beifahrer auf 21,5 °C eingestellt.

Über die zweiten Bedienelemente 3 kann der Nutzer außerhalb des eigentlichen Klimamenüs Einstellungen der Heiz- und / oder Klimaanlage vornehmen. Dabei kann vorgesehen sein, daß diese Grundeinstellungen nur über die zweiten Bedienelemente 3 vornehmbar sind oder aber alternativ auch im Klimamenü einstellbar sind. Die zweiten Bedienelemente 3 weisen eine erhöhte Priorität auf, so daß diese bei Betätigung vorrangig ausgeführt werden. Die zweiten Bedienelemente 3 umfassen zwei Wippschalter 18, 19 für die Temperatur, zwei Auto- Schalter 20, 21, einen Schalter 22 für eine Frontscheibenheizung, einen Schalter 23 für eine Heckscheibenheizung, einen Mono-Schalter 24, einen Umluft- Schalter 25 und einen Schalter 26 für eine Warnblinkanlage, der hier aber nicht näher erläutert werden soll. Möchte nun beispielsweise der Kraftfahrzeugführer die für ihn eingestellte Temperatur von 22,5 °C auf 20 °C ändern, so betätigt er den Wippschalter 18 auf der für die Temperaturerniedrigung gekennzeichneten Seite. Zur Kennzeichnung können die beiden Schaltflächen beispielsweise blau bzw. rot gekennzeichnet oder mit "+" bzw. "-" beschriftet sein. Nach der Betätigung des Wippschalters 18 wird die Statuszeile 13 vergrößert auf dem Bordmonitor 1 dargestellt, wobei die Temperatur des Fahrers optisch hervorgehoben dargestellt wird. Durch entsprechendes Betätigen des Wippschalters 18 kann dann die gewünschte Temperatur eingestellt werden. Nach beendigter Einstellung wechselt die vergrößerte Einstellung wieder in die Statuszeile 13. Anstelle der Wippschalter 18, 19 können auch einfache Druckschalter verwendet werden, wobei dann die Verstellungen über den Bedienknopf 16 vomehmbar sind. Mittels der Auto- Schalter 20, 21 ist eine automatische Heiz- und / oder Klimaregelung aktivierbar bzw. deaktivierbar. Mittels des Mono- Schalters 24 wird der gesamte Fahrgastinnenraum als einheitliches Gebilde aufgefaßt und entsprechend der Einstellungen ein einheitliches Klima eingeregelt.

Für die Einstellungen im Fond des Kraftfahrzeuges gibt es prinzipiell zwei verschiedene Lösungsmöglichkeiten. Zum einen kann die Einstellung am Infotainment vorgenommen werden, in dem beispielsweise ein Umschalter vorhanden ist. Ist dieser Umschalter aktiv, so werden die Bedienelemente für den Fahrer bzw. Beifahrer den jeweiligen Positionen im Fond zugeordnet. Die andere Möglichkeit besteht darin, im Fond ein eigenes, gegebenenfalls hinsichtlich der Funktionalität reduziertes Infotainment anzuordnen. Es kann aber auch vorgesehen sein, daß nur gewisse Grundfunktionen wie beispielsweise Temperatur des Fonds vom vorderen Infotainment aus einstellbar sind, wohingegen komplexere Funktionen nur vom Fond selbst aus einstellbar sind.

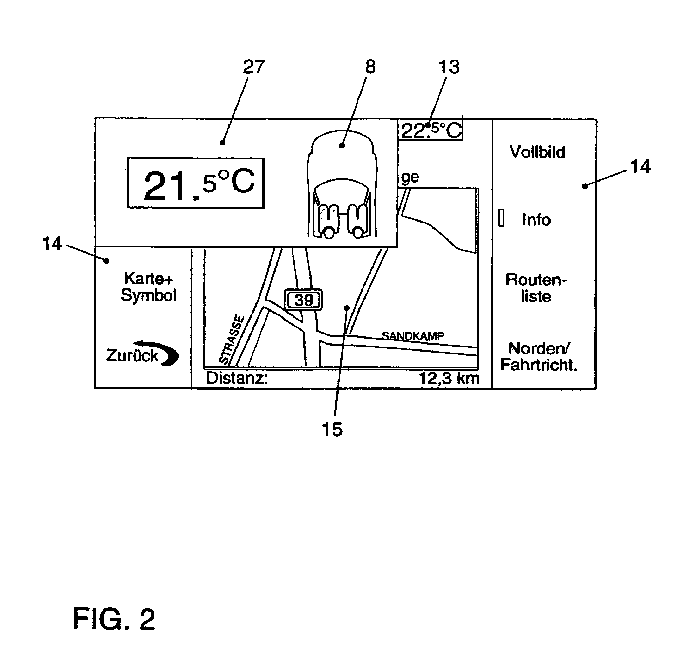

In der Fig. 2 ist eine alternative Möglichkeit zur Visualisierung der Einstellungen der Grundfunktionen über die zweiten Bedienelemente 3 dargestellt. Dabei ist auf dem Bordmonitor 1 ein Navigationsmenü in der Einstellungsanzeige dargestellt, wobei konkret eine digitale Straßenkarte gezeigt ist. In der Belegungszuordnung 14 sind die für das Menü gültigen Belegungen der multifunktionalen Bedienelemente 4-11 dargestellt. Betätigt der Nutzer den Wippschalter 18, so wird ein Popup- Menü 27 eingeblendet, wohingegen die Statuszeile 13 unverändert bleibt. In dem Popup- Menü 27 ist ein piktogrammförmiges Kraftfahrzeug 28 mit Insassen dargestellt. Aufgrund der Ausrichtung der Insassen zum Kraftfahrzeug 28 ist dabei zu entnehmen, daß der Fahrer und Beifahrer dargestellt sind. Da die linke Figur optisch hervorgehoben ist, erhält der Nutzer zusätzlich die Information, daß die Temperatur für den Fahrer ausgewählt wurde und durch den Wippschalter 18 veränderbar ist.

### BEZUGSZEICHENLISTE

- 1: Bordmonitor
- 2: erste Bedienelemente
- 3: zweite Bedienelemente
- 4-11: multifunktionale Bedienelemente
- 12: Bedienleiste
- 13: Statusleiste
- 14: Belegungszuordnung
- 15: Einstellungsanzeige
- 16: zentraler Bedienknopf
- 17: Bedienfeld
- 18: Wippschalter
- 19: Wippschalter
- 20: Auto- Schalter
- 21: Auto- Schalter
- 22: Schalter für Frontscheibenheizung
- 23: Schalter für Heckscheibenheizung
- 24: Mono- Schalter
- 25: Umluft- Schalter
- 26: Schalter für Warnblinkanlage
- 27: Popup- Menü
- 28: piktogrammförmiges Fahrzeug

## Patentansprüche

1. Multifunktionsanzeige- und Bedieneinrichtung für ein Fahrzeug umfassend einen Bordmonitor (1), erste Bedienelemente (2) und separate zweite Bedienelemente (3), wobei über die Bedienung der ersten Bedienelemente (2) Menüs von Funktionen aufrufbar sind, wobei über die Bedienung der separaten zweiten Bedienelemente (3) Einstellungen der Heiz- und/oder Klimaanlage veränderbar sind, und wobei den separaten zweiten Bedienelementen (3) eine erhöhte Priorität zugeordnet ist, **dadurch gekennzeichnet, dass**
in den einzelnen Menüs der Funktionen, die über die ersten Bedienelemente (2) bedienbar sind, eine Statusanzeige (13) mit Informationen zu den Einstellungen der Heiz- und/oder Klimaanlage angeordnet ist, wobei die Stätusanzeige in den einzelnen Menüs der Funktionen permanent auf dem Bordmonitor (1) angeordnet ist.

2. Multifunktionsanzeige- und Bedieneinrichtung nach Anspruch 1, **dadurch gekennzeichnet, dass**
die Statusanzeige (13) bei Betätigung der separaten zweiten Bedienelemente'(3) als Menü aufzoombar ist oder als Pop-Up-Menü (27) einblendbar ist, wobei die aufgezoomte Statusanzeige oder das eingeblendete Pop-Up-Menü (27) als Eingabeanzeige für die durch die Betätigung der separaten zweiten Bedienelemente (3) veränderten Einstellungen der Heiz- und/oder Klimaanlage dient.

3. Multifunktionsanzeige- und Bedieneinrichtung nach Anspruch 1 oder 2, **dadurch gekennzeichnet, dass**
nach dem Aufzoomen der Statusanzeige oder dem einblenden des Pop-Up-Menüs (27) die ursprüngliche Anzeige zumindest teilweise sichtbar bleibt.

4. Multifunktionsanzeige- und Bedieneinrichtung nach einem oder mehreren der vorangegangenen Ansprüche, **dadurch gekennzeichnet, dass**
die Heiz- und/oder Klimaanlage zusätzlich über die ersten Bedienelemente (2) auswählbar und bedienbar sind.

5. Multifunktionsanzeige- und Bedieneinrichtung nach einem oder mehreren der vorangegangenen Ansprüche, **dadurch gekennzeichnet, dass**
neben dem Bordmonitor (1) multifunktionale Bedienelemente (4-11) angeordnet sind, deren jeweilige Funktionalität an der entsprechenden Position auf dem Bordmonitor (1) alphanumerisch und/oder piktogrammförmig dargestellt sind.

6. Multifunktionsanzeige- und Bedieneinrichtung nach Anspruch 5, **dadurch gekennzeichnet, dass**
aktiven Funktionen auf dem Bordmonitor (1) optisch hervorgehoben dargestellt sind.

7. Multifunktionsanzeige- und Bedieneinrichtung nach einem der vorangegangenen Ansprüche, **dadurch gekennzeichnet, dass**
die jeweiligen Gebläseeinstellungen für die Fahrzeuginsassen als piktogrammförmige Pfeile an einer piktogrammförmigen Figur darstellbar sind.

## Claims

1. Multifunctional display and operator control device for a vehicle, comprising an on-board monitor (1), first operator control elements (2) and separate, second operator control elements (3), it being possible to call up menus of functions by operating the first operator control elements (2), it being possible to change settings of the heating and/or air-conditioning system by operating the separate, second operator control elements (3), and an increased priority being assigned to the separate, second operator control elements (3),
**characterized in that**
a status display (13) containing information about the settings of the heating and/or air-conditioning system is arranged in the individual menus of the functions which can be operated by the first operator control elements (2), the status display in the individual menus of the functions being permanently arranged on the on-board monitor (1).

2. Multifunctional display and operator control device according to Claim 1, **characterized in that**
it is possible to zoom in on the status display (13) as a menu or insert it as a pop-up menu (27) when the separate, second operator control elements (3) are operated, the status display which is zoomed in on or the pop-up menu (27) which is inserted being used as an input display for the settings of the heating and/or air-conditioning system which are changed by operating the separate, second operator control elements (3).

3. Multifunctional display and operator control device according to Claim 1 or 2, **characterized in that**
the original display remains at least partially visible after the status display is zoomed in on or the pop-up menu (27) is inserted.

4. Multifunctional display and operator control device according to one or more of the preceding claims, **characterized in that**
the heating and/or air-conditioning system can additionally be selected and operated by the first operator control elements (2).

5. Multifunctional display and operator control device according to one or more of the preceding claims, **characterized in that**
multifunctional operator control elements (4-11) are arranged next to the on-board monitor (1) and their respective functionality is displayed alphanumerically and/or in the form of a pictogram in the corresponding position on the on-board monitor (1).

6. Multifunctional display and operator control device according to Claim 5, **characterized in that**
active functions are displayed on the on-board monitor (1) in a visually emphasized manner.

7. Multifunctional display and operator control device according to one of the preceding claims, **characterized in that**
the respective blower settings for the vehicle occupants can be displayed as pictogram arrows in a pictographic figure.

## Revendications

1. Dispositif de commande et d'affichage multifonctions pour un véhicule, comprenant un écran de bord (1), des premiers éléments de commande (2) et des deuxièmes éléments de commande séparés (3), sachant que des menus de fonctions peuvent être appelés à l'écran en manoeuvrant les premiers éléments de commande (2), sachant que des réglages de l'installation de chauffage et/ou de climatisation peuvent être modifiés en manoeuvrant les deuxièmes éléments de commande séparés (3), et sachant qu'une plus grande priorité est donnée aux deuxièmes éléments de commande séparés (3),
**caractérisé en ce qu'**un affichage d'état (13) présentant des informations sur les réglages de l'installation de chauffage et/ou de climatisation est disposé dans les différents menus des fonctions qui peuvent être commandées au moyen des premiers éléments de commande (2), sachant que l'affichage d'état est disposé en permanence sur l'écran de bord (1) dans les différents menus des fonctions.

2. Dispositif de commande et d'affichage multifonctions selon la revendication 1, **caractérisé en ce que** l'affichage d'état (13) peut, lors de l'actionnement des deuxièmes éléments de commande séparés (3), être agrandi par zoom sous forme de menu ou incrusté sous forme de menu flottant (27) (« menu popup »), sachant que l'affichage d'état agrandi par zoom ou le menu flottant incrusté (27) sert d'affichage de saisie pour les réglages de l'installation de chauffage et/ou de climatisation modifiés par l'actionnement des deuxièmes éléments de commande séparés (3).

3. Dispositif de commande et d'affichage multifonctions selon la revendication 1 ou 2, **caractérisé en ce que** l'affichage initial reste au moins partiellement visible à la suite de l'agrandissement par zoom de l'affichage d'état ou de l'incrustation du menu flottant (27).

4. Dispositif de commande et d'affichage multifonctions selon l'une quelconque ou plusieurs des revendications précédentes, **caractérisé en ce que** l'installation de chauffage et/ou de climatisation peut être en outre sélectionnée et commandée au moyen des premiers éléments de commande (2).

5. Dispositif de commande et d'affichage multifonctions selon l'une quelconque ou plusieurs des revendications précédentes, **caractérisé en ce que** des éléments de commande multifonctions (4-11) sont disposés à côté de l'écran de bord (1), éléments dont les fonctionnalités respectives sont représentées de manière alphanumérique et/ou sous forme de pictogramme à l'emplacement correspondant sur l'écran de bord (1).

6. Dispositif de commande et d'affichage multifonctions selon la revendication 5, **caractérisé en ce que** les fonctions actives sont représentées sur l'écran de bord (1) en étant visuellement mises en évidence.

7. Dispositif de commande et d'affichage multifonctions selon l'une quelconque des revendications précédentes, **caractérisé en ce que** les réglages respectifs des soufflantes pour les occupants du véhicule peuvent être représentés sous forme de flèches en pictogrammes sur une figure en pictogramme.
